# EUROPÄISCHE PATENTSCHRIFT

(11) **EP 4 062 082 B1**
(45) Veröffentlichungstag und Bekanntmachung des Hinweises auf die Patenterteilung: **10.01.2024**
(21) Anmeldenummer: 21732811.1
(22) Anmeldetag: 25.05.2021
(51) Int. Cl.: F16F 9/56, F16F 9/32, F16F 9/46, F16F 9/18, F16F 9/34

(54) **ARRETIERSYSTEM**
LOCKING SYSTEM
SYSTÈME DE VERROUILLAGE

(30) Priorität: 26.05.2020 DE 102020003133; 04.01.2021 DE 102021100029
(43) Veröffentlichungstag der Anmeldung: 28.09.2022
(73) Patentinhaber: Detec Reliable Solutions GmbH, 45277 Essen (DE)
(72) Erfinder: ROTTLÄNDER, Hendrik, 45128 Essen (DE); SEUTHE, Adrian, 58300 Wetter (DE)
(74) Vertreter: Schneiders & Behrendt Bochum
(86) Internationale Anmeldenummer: PCT/EP2021/063909
(87) Internationale Veröffentlichungsnummer: WO 2021/239733

(56) Entgegenhaltungen:
- CN-A- 104 613 124
- US-A- 3 415 159
- US-A1- 2018 355 937
- US-B2- 8 628 100

## Beschreibung

Die Erfindung betrifft ein stufenlos einstellbares Arretiersystem umfassend eine Zylinder-Kolben-Anordnung mit einem Zylinder, welcher einen Deckel und einen Boden aufweist, einem im Zylinder verschiebbar angeordneten, an seiner Außenfläche in Umfangsrichtung mindestens eine ringförmige Kolbendichtung aufweisenden Kolben, an welchem eine Kolbenstange angeordnet ist, die mindestens teilweise axial am deckelseitigen Ende des Zylinders herausschiebbar ist, einem zwischen einer Öffnungs- und Schließposition stufenlos einstellbaren Verschlussteil und einem im Zylinder angeordnetem Fluid, wobei der Zylinder doppelwandig mit einer Innenhülse und einer Außenhülse ausgebildet ist, der Kolben in der Innenhülse angeordnet ist, in einem Ringraum zwischen Innenhülse und Außenhülse ein rohrförmiger und an seiner Außen- und Innenfläche in Umfangsrichtung jeweils umlaufende Dichtung aufweisender Ausgleichskörper verschiebbar angeordnet ist, das einstellbare Verschlussteil am bodenseitigen Ende des Zylinders angeordnet ist und das bodenseitige Ende der Innenhülse mittels des Verschlussteils verschließbar ist.

Ein ähnliches Arretiersystem ist beispielsweise aus der DE 42 39 681 A1 bekannt. Das dort offenbarte Arretiersystem soll zur stufenlosen Dämpfung und Feststellung von Autotüren eingesetzt werden. Das Verschlussteil ist dort mehrteilig ausgebildet und im Kolben angeordnet. Wenn das dortige Arretiersystem festgestellt ist, sind zwei gegenüberliegende Durchflussöffnungen mittels der zweier Verschlussteile und jeweils einem Duckbill-Ventil verschlossen, indem die Verschlussteile durch eine Feder gegen die Durchflussöffnungen gepresst werden. Wird nun eine axiale Druck- oder Zugkraft auf die Kolbenstange ausgeübt, öffnet entsprechend eines der beiden Verschlussteile, wenn die Federkraft überwunden wird. Der Druck im Innenraum des Kolbens erhöht sich entsprechend, bis das Duckbill-Ventil öffnet und der Durchfluss des Fluids durch den Kolbenkörper somit ermöglicht wird. Die Kolbenstange kann somit in die gewünschte Position verschoben werden. Sobald keine Kraft mehr auf die Kolbenstange ausgeübt wird, werden die Durchflussöffnungen automatisch durch die Rückstellkraft der Feder wieder verschlossen.

Ein Arretiersystem der eingangs genannten Art ist beispielsweise aus der US 3 415 159 A bekannt. Die CN104613124A offenbart einen weiteren bekannten Dämpfer.

Einsatzgebiete solcher Arretiersysteme sind neben Autotüren beispielsweise Maschinenwartungsklappen in Werkhallen, Brandschutztüren und Montagehilfen bei Möbeln.

Das bekannte Arretiersystem ist im Aufbau relativ komplex und unflexibel. Die Anordnung des mehrteiligen Verschlussmechanismus im Kolben ist aufwendig und nur mit sehr hohem Aufwand zu warten sowie nur mit äußerst hohem Aufwand adaptierbar. Insbesondere die Anordnung der aus einem elastomeren bestehenden Duckbill-Ventile im Kolben ist sehr aufwendig.

Es ist daher die Aufgabe der Erfindung bekannte, stufenlos einstellbare Arretiersysteme dahingehend weiterzubilden, dass diese sich durch einen robusten und einfachen Aufbau auszeichnen, auf besonders einfache Art zu warten und zu adaptieren sind und gleichzeitig hochzuverlässig und präzise arbeiten sowie eine verbesserte Strömungsmechanik aufweisen.

Hierzu schlägt die Erfindung ein Arretiersystem gemäß den Merkmalen des Anspruchs 1 vor. Hierdurch ist die Durchflussöffnung durch eine besonders geeignete Strömungsmechanik gekennzeichnet.

Durch die erfindungsgemäße Ausbildung des Arretiersystems werden eine innere und eine äußere gebildet, welche durch das Verschlussteil trennbar sind und in welchen sich das Fluid befindet. Die äußere Fluidkammer ist ein rohrförmiger Ringraum zwischen Innenhülse und Außenhülse, welcher bodenseitig durch den Verschlusskörper und deckelseitig durch den Ausgleichskörper begrenzt ist. Die innere Fluidkammer entspricht dem zylinderförmigen Raum in der Innenhülse, welcher bodenseitig ebenfalls durch das Verschlussteil und deckelseitig durch den Kolben begrenzt ist.

Das Verschlussteil kann die Verbindung zwischen diesen beiden Fluidkammern öffnen, begrenzen und schließen. Wenn sich das Verschlussteil in der Öffnungsposition befindet, kann die Kolbenstange axial verschoben werden. Je nach Richtung der Verschiebung strömt das Fluid von der einen in die jeweils andere Fluidkammer. Je schmaler die Öffnung eingestellt wird, desto höher ist die Dämpfung der Beweglichkeit der Kolbenstange. Befindet sich das Verschlussteil in der Schließposition, ist die Kolbenstange festgestellt und lässt sich nicht bewegen.

Die Einstellung des Verschlussteils kann je nach Anforderung über eine geeignete Steuervorrichtung durchgeführt werden, beispielsweise in Form von einem mechanischen Hebel, einer Feder, über eine hydraulische Ansteuerung oder in Form einer elektronischen Ansteuerung. Eine bevorzugte Ausführungsform sieht vor, dass die Steuervorrichtung außerhalb des Zylinders angeordnet ist. Hierdurch wird ermöglicht, dass die Steuervorrichtung und damit ein Wesentlicher Teil der Wirkungsweise des Arretiersystems jederzeit an geänderte Anforderungen adaptiert werden kann.

Eine weitere vorteilhafte Weiterbildung der Erfindung sieht vor, dass die Innenhülse und die Außenhülse form- und/oder kraftschlüssig miteinander verbunden sind. Eine solche lösbare Verbindung ermöglicht einen besonders einfachen Zusammenbau sowie eine unproblematische Wartung des Arretiersystems.

Besonders geeignet zur Herstellung der Verbindung sind miteinander korrespondierende Schraubgewinde an der Innenhülse und der Außenhülse.

Weiterhin ist es von Vorteil, wenn das Verschlussteil als rotationssymmetrischer Körper bezogen auf die Längsachse des Zylinders ausgebildet ist. Durch die Rotationssymmetrie lässt sich eine besonders gleichmäßige Strömung des Fluids zwischen den beiden Fluidkammern realisieren.

Als Fluid wird vorzugsweise ein Hydrauliköl eingesetzt.

Die Erfindung wird im Folgenden anhand der Zeichnungen näher erläutert. Es zeigen:
- Figur 1:: schematisch einen Querschnitt durch ein erfindungsgemäßes Arretiersystem im dynamischen Zustand in einem Ausführungsbeispiel;
- Figur 2, 3 und 4:: schematisch die Ein- und Feststellung der Kolbenstange bei dem Ausführungsbeispiel nach Figur 1;
- Figur 5:: schematisch das Verschlussteil des Arretiersystems aus Figur 1 in 3D-Ansicht.

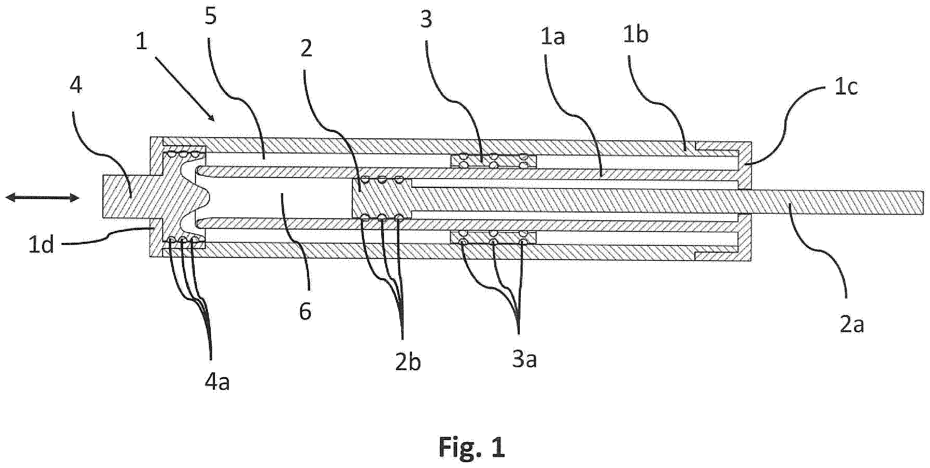

In Figur 1 ist ein Zylinder eines erfindungsgemäßen Arretiersystems mit dem Bezugszeichen 1 bezeichnet. Der Zylinder 1 ist doppelwandig ausgestaltet und weist entsprechend eine Innenhülse 1a, eine Außenhülse 1b, einen Deckel 1c, und einen Boden 1d auf. In der Innenhülse 1a ist ein Kolben 2 mit einer Kolbenstange 2a angeordnet. Der Kolben und die Kolbenstange können erfindungsgemäß anders als in diesem Ausführungsbeispiel auch den gleichen Durchmesser aufweisen. Die Kolbenstange 2a ragt aus dem deckelseitigen Ende des Zylinders 1 hinaus und ist axial aus dem Zylinder 1 verschiebbar. Der Kolben 2 weist zudem an seinem Außenumfang umlaufende ringförmige Kolbendichtungen 2b auf. Im Ringraum zwischen Außenhülse 1b und Innenhülse 1a ist ein hohlzylinderförmiger Ausgleichskörper 3 angeordnet. Der Ausgleichskörper 3 weist an seiner Innenfläche und seiner Außenfläche Dichtungen 3a auf. Am bodenseitigen Ende des Zylinders 1 ist des Weiteren ein axial verschiebbares Verschlussteil 4 angeordnet. Das Verschlussteil 4 weist an seinen Außenseiten umlaufende Dichtungen 4a auf. Die Einstellung des Verschlussteils 4 wird über eine hier nicht dargestellte, geeignete Ansteuerung realisiert. Die Ansteuerung kann beispielsweise als mechanischer Hebel oder Feder ausgebildet sein, aber auch eine hydraulische oder elektronische Ansteuerung ist möglich.

Die Innenhülse 1a und die Außenhülse 1b weisen am deckelseitigen Ende korrespondierende Gewinde auf. Die Innenhülse 1a kann also auf die Außenhülse 1b aufgeschraubt werden.

Das erfindungsgemäße Arretiersystem weist somit zwei Fluidkammern auf, nämlich eine äußere Fluidkammern 5, welche durch die Innenwand der Außenhülle 1b und durch die Außenwand der Innenhülse 1a sowie das Verschlussteil 4 und den Ausgleichskörper 3 begrenzt wird und eine innere zylinderförmige Fluidkammer 6, welche durch den Innenraum der Innenhülse 1a sowie den Kolben 2 und das Verschlussteil 4 definiert wird. Wenn sich das Verschlussteil 4 in der Öffnungsposition befindet, wie in Figur 1 dargestellt, kann das Fluid von der äußeren Fluidkammer 5 in die innere Fluidkammer 6 strömen und umgekehrt.

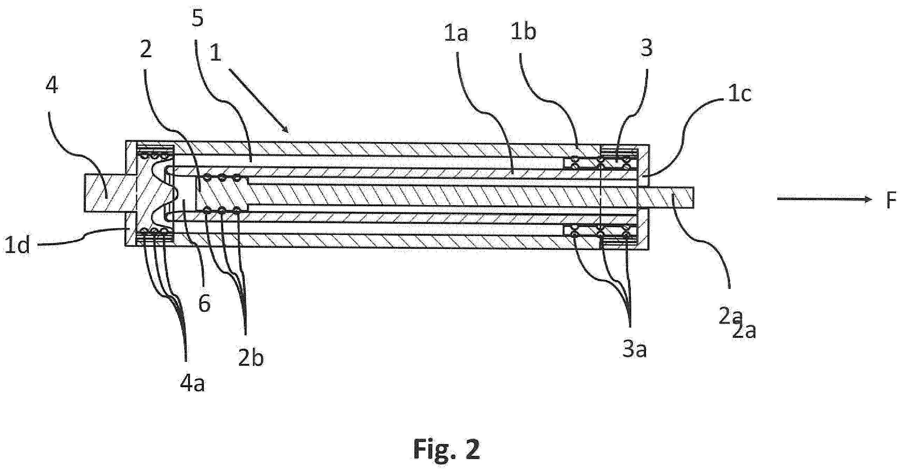

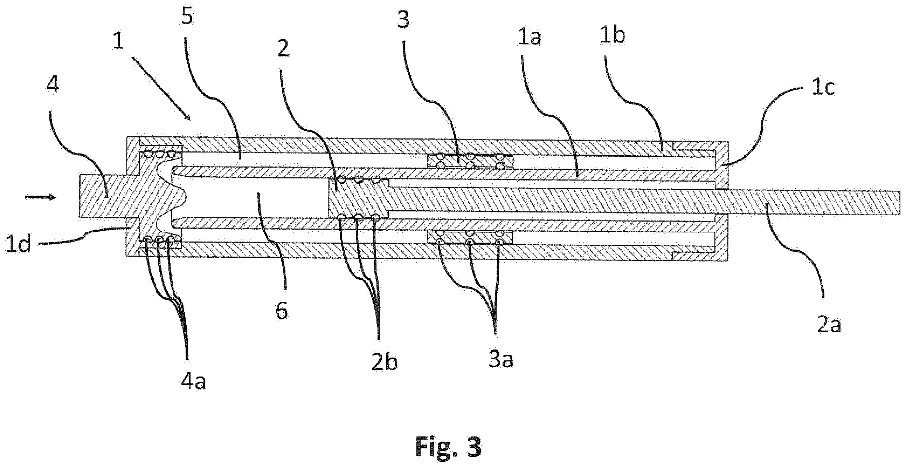

Anhand der Figur 2, 3 und 4 wird im Folgenden die Funktion des erfindungsgemäßen Arretiersystems näher beschrieben. In Figur 2 ist die Kolbenstange 2 weit eingefahren. Die innere Fluidkammer 6 weist daher nur ein sehr kleines Volumen auf. Der Ausgleichskörper 3 befindet sich am deckelseitigen Ende des Zylinders 1, sodass das Volumen der äußeren Fluidkammer 6 maximal ist. Das Verschlussteil 4 ist in der Öffnungsposition. Das heißt, dass das Fluid zischen den Fluidkammern 5, 6 hin und her strömen kann. Wird nun eine Zugkraft F auf die Kolbenstange 2a ausgeübt, wird der Kolben 2 in Richtung des deckelseitigen Endes des Zylinders 1 verschoben, wie in Figur 2 dargestellt. Das Fluid strömt von der äußeren Fluidkammer 5 in die innere Fluidkammer 6. Der Ausgleichkörper 3 wird in Richtung des bodenseitigen Endes des Zylinders 1 verschoben. Das Volumen der äußeren Fluidkammer 5 verkleinert sich entsprechend und das Volumen der inneren Fluidkammer 6 vergrößert sich im gleichen Maße. Die Summe der beiden Volumina bleibt gleich. Der Bereich zwischen Ausgleichskörper 3 und Deckel 1c füllt sich mit Luft. Hierzu ist die Verschraubung zwischen Innenhülse 1a und Außenhülse 1b luftdurchlässig ausgeführt. Es ist aber auch möglich hierzu extra geeignete Öffnungen am Deckel 1c vorzusehen.

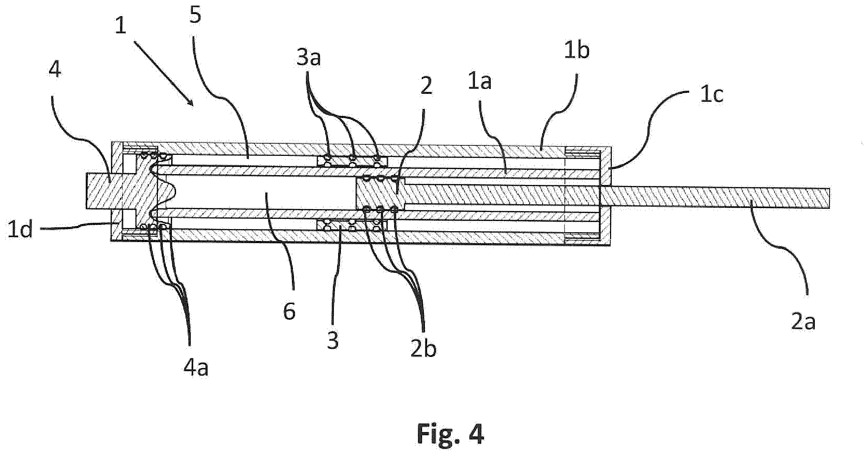

Sobald die Kolbenstange 2a in der gewünschten Position ist, kann das Verschlussteil 4 mittels der Ansteuerung in die Schließposition geführt werden, sodass kein Fluid mehr zwischen den beiden Fluidkammern 5, 6 fließen kann. Dieser Systemzustand ist in Figur 4 dargestellt. Die Kolbenstange 2a kann entsprechend nicht mehr bewegt werden. Das erfindungsgemäße Arretiersystem ist in einem statischen Zustand. Die Haltekraft bei Zugbelastung reicht hier bis zum Verdampfungsdruck des Fluids.

Die Ansteuerung des Verschlussteils 4 kann über einen aktiven Steuerbefehl ausgeführt werden. Es ist aber auch möglich, die Ansteuerung rückstellend beispielsweise über eine Rückstellfeder zu realisieren. Bei dieser Ausführungsform wird das Verschlussteil 4 im Normalzustand durch die Rückstallkraft der Feder in der Schließposition gehalten. Wird die Rückstellkraft durch Druckbelastung der Kolbenstange überwunden, öffnet das Verschlussteil. Soll der Kolben 2 in Richtung Deckel 1c bewegt werden, muss das Verschlussteil 4 über den beschriebenen aktiven Steuerbefehl geöffnet werden.

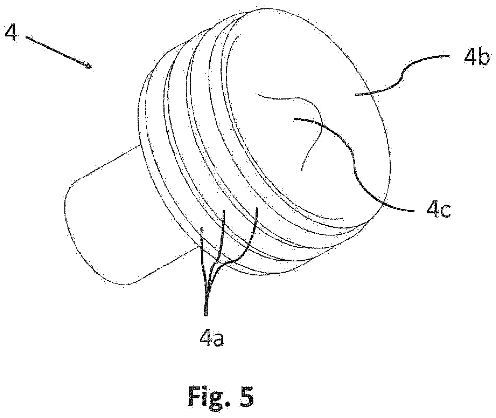

Figur 5 zeigt eine 3D-Ansicht des Verschlussteils 4. Das Verschlussteil 4 weist einen in radialer Richtung steil ansteigenden, ringförmigen Vorsprung 4b an seinem Außenumfang und einen kegelförmigen, an der Spitze abgerundeten, zentralen Vorsprung 4c auf. Durch diese Formgebung korrespondiert das Verschlussteil 4 in optimaler Weise mit dem bodenseitigen Ende der Innenhülse 1a. Wird das Verschlussteil 4 zwischen der Öffnungsposition und Schließposition verschoben bildet sich ein gleichmäßiger Durchflussspalt mit sehr gleichmäßigen Strömungseigenschaften. Durch exakte Einstellung des Verschlussteils 4 kann somit auch eine gewünschte Dämpfung der Beweglichkeit der Kolbenstange 2a eingestellt werden. Durch die Formgebung verläuft die Intensität der Dämpfung nahezu linear abhängig von der Spaltbreite respektive der Position des Verschlussteils. Die Dämpfung lässt sich auch durch die Viskosität des eingesetzten Fluids beeinflussen.

Das erfindungsgemäße Arretiersystem zeichnet sich insgesamt durch einen sehr einfachen und kostengünstigen Aufbau aus. Es ist einfach und unabhängig von der Einbaulage zu montieren und arbeitet hochpräzise.

### Bezugszeichenliste:

- 1: Zylinder
- 1a: Innenhülse
- 1b: Außenhülse
- 1c: Deckel
- 1d: Boden
- 2: Kolben
- 2a: Kolbenstange
- 2b: Kolbendichtung
- 3: Ausgleichskörper
- 3a: Dichtung
- 4: Verschlussteil
- 4a: Dichtung
- 4b: ringförmiger Vorsprung
- 4c: kegelförmiger Vorsprung
- 5: äußere Fluidkammer
- 6: innere Fluidkammer
- 5: äußere Fluidkammer
- 6: innere Fluidkammer

## Patentansprüche

1. Stufenlos einstellbares Arretiersystem umfassend eine Zylinder-Kolben-Anordnung mit einem Zylinder (1), welcher einen Deckel (1c) und einen Boden (1d) aufweist, einem im Zylinder (1) verschiebbar angeordneten, an seiner Außenfläche in Umfangsrichtung mindestens eine ringförmige Kolbendichtung (2a) aufweisenden Kolben (2), an welchem eine Kolbenstange (2b) angeordnet ist, die mindestens teilweise axial am deckelseitigen Ende des Zylinders (1) herausschiebbar ist, einem zwischen einer Öffnungs- und Schließposition stufenlos einstellbaren Verschlussteil (4) und einem im Zylinder (1) angeordneten Fluid, wobei der Zylinder doppelwandig mit einer Innenhülse (1a) und einer Außenhülse (1b) ausgebildet ist, der Kolben (2) in der Innenhülse (1a) angeordnet ist, in einem Ringraum zwischen Innenhülse (1a) und Außenhülse (1b) ein rohrförmiger und an seiner Außen- und Innenfläche in Umfangsrichtung jeweils umlaufende Dichtungen (3a) aufweisender Ausgleichkörper (3) verschiebbar angeordnet ist, das Verschlussteil (4) am bodenseitigen Ende (3) des Zylinders (1) angeordnet ist und das bodenseitige Ende der Innenhülse (1a) mittels des Verschlussteils (4) verschließbar ist,
**dadurch gekennzeichnet,**
**dass** das Verschlussteil (4) axial verschiebbar ist und einen in axialer Richtung anwachsenden ringförmigen Vorsprung (4b) am Außenumfang und einen kegelförmigen zentralen Vorsprung (4c) aufweist, wobei der ringförmige Vorsprung (4b) und der zentrale Vorsprung (4c) in Richtung der Innenhülse (1a) weisen, sodass sich zwischen Verschlussteil (4) und Innenhülse (1a) ein verschließbarer Durchflussspalt bildet, dessen Breite abhängig von der Position des Verschlussteils (4) ist.

2. Arretiersystem nach Anspruch 1, **gekennzeichnet durch**, eine außerhalb des Zylinders angeordnete Steuervorrichtung, welche auf das Verschlussteil (4) wirkt.

3. Arretiersystem nach Anspruch 1 oder 2, **dadurch gekennzeichnet, dass** die Innenhülse (1a) und die Außenhülse (1b) lösbar, form- und/oder kraftschlüssig miteinander verbunden sind.

4. Arretiersystem nach Anspruch 3, **dadurch gekennzeichnet, dass** die Innenhülse (1a) und die Außenhülse (1b) mittels korrespondierender Schraubgewinde miteinander verbindbar sind.

5. Arretiersystem nach einem der vorgenannten Ansprüche, **dadurch gekennzeichnet, dass** das Verschlussteil (3) als rotationssymmetrischer Körper bezogen auf die Längsachse des Zylinders (1) ausgebildet ist

6. Arretiersystem nach Anspruch 1, **dadurch gekennzeichnet, dass** das Fluid ein Hydrauliköl ist.

## Claims

1. Continuously variable locking system with a cylinder-piston arrangement having a cylinder (1), which comprises a cap (1c) and a base (1d), a piston (2), which is arranged displaceably in the cylinder (1) and comprises at least one annular piston seal (2a) on its outer surface in the circumferential direction, on which piston a piston rod (2b) is arranged, which can be pushed at least partially out axially at the cap end of the cylinder (1), a closing part (4), which is continuously variable between an open and a closed position, and a fluid disposed in the cylinder (1), wherein the cylinder is formed with a double wall having an inner sleeve (1a) and an outer sleeve (1b), the piston (2) is disposed in the inner sleeve (1a), a tubular compensating body (3) having seals (3a) running in the circumferential direction on its outer and inner surface is displaceably arranged in an annular space between inner sleeve (1a) and outer sleeve (1b), the closing part (4) being arranged at the base end (3) of the cylinder (1) and wherein the base end of the inner sleeve (1a) can be closed by means of the closing part (4),
**characterized in that**
the closing part (4) is axially displaceable and has an annular projection (4b) increasing in the axial direction on the outer circumference and a conical central projection (4c), wherein the annular projection (4b) and the central projection (4c) point into the direction of the inner sleeve (1a) so that a closable flow gap is formed between the closing part (4) and the inner sleeve (1a), the width of the flow gap depending on the position of the closing part (4).

2. Locking system according to claim 1, **characterized by** a control mechanism arranged outside of the cylinder, which mechanism acts on the closing part (4).

3. Locking system according to claim 1 or 2, **characterized in that** the inner sleeve (1a) and the outer sleeve (1b) are connected detachably in a form- and/or force-locking manner to one another.

4. Locking system according to claim 3, **characterized in that** the inner sleeve (1a) and the outer sleeve (1b) can be connected to one another by means of corresponding screw threads.

5. Locking system according to any one of the preceding claims, **characterized in that** the closing part (4) is formed as a rotationally symmetrical body with regard to the longitudinal axis of the cylinder (1).

6. Locking system according to claim 1, **characterized in that** the fluid is a hydraulic oil.

## Revendications

1. Système de verrouillage réglable en continu comprenant un ensemble cylindre-piston doté d'un cylindre (1), qui présente un couvercle (1c) et un fond (1d), d'un piston (2) agencé coulissant dans le cylindre (1) et présentant, sur sa surface extérieure, dans la direction circonférentielle, au moins une garniture de piston (2a) annulaire, une tige de piston (2b) étant agencée sur le piston, ladite tige de piston pouvant être sortie au moins en partie axialement au niveau de l'extrémité côté couvercle du cylindre (1), d'une pièce de fermeture (4) réglable en continu entre une position d'ouverture et une position de fermeture et d'un fluide agencé dans le cylindre (1), le cylindre étant réalisé à double paroi avec un manchon intérieur (1a) et un manchon extérieur (1b), le piston (2) étant agencé dans le manchon intérieur (1a), un corps de compensation (3) tubulaire, qui présente sur sa surface extérieure et sa surface intérieure dans la direction circonférentielle respectivement des éléments d'étanchéité (3a) périphériques, étant agencé coulissant dans un espace annulaire situé entre le manchon intérieur (1a) et le manchon extérieur (1b), la pièce de fermeture (4) étant agencée sur l'extrémité (3) côté fond du cylindre (1) et l'extrémité côté fond du manchon intérieur (1a) pouvant être fermée au moyen de la pièce de fermeture (4),
**caractérisé en ce que**
la pièce de fermeture (4) peut coulisser axialement et présente une saillie annulaire (4b) s'accroissant dans la direction axiale sur la circonférence extérieure et une saillie centrale (4c) conique, la saillie annulaire (4b) et la saillie centrale (4c) étant orientées dans la direction du manchon intérieur (1a), de telle sorte qu'un interstice de passage pouvant être fermé se forme entre la pièce de fermeture (4) et le manchon intérieur (1a), dont la largeur dépend de la position de la pièce de fermeture (4).

2. Système de verrouillage selon la revendication 1, **caractérisé par** un dispositif de commande agencé à l'extérieur du cylindre et agissant sur la pièce de fermeture (4).

3. Système de verrouillage selon la revendication 1 ou 2, **caractérisé en ce que** le manchon intérieur (1a) et le manchon extérieur (1b) sont reliés l'un à l'autre de manière détachable, par complémentarité de forme et/ou par adhérence.

4. Système de verrouillage selon la revendication 3, **caractérisé en ce que** le manchon intérieur (1a) et le manchon extérieur (1b) peuvent être reliés l'un à l'autre au moyen de filetages correspondants.

5. Système de verrouillage selon l'une des revendications précédentes, **caractérisé en ce que** la pièce de fermeture (3) est réalisée sous la forme d'un corps à symétrie de révolution par rapport à l'axe longitudinal du cylindre (1).

6. Système de verrouillage selon la revendication 1, **caractérisé en ce que** le fluide est une huile hydraulique.
